# EUROPÄISCHE PATENTSCHRIFT

(11) **EP 1 350 658 B1**
(45) Veröffentlichungstag und Bekanntmachung des Hinweises auf die Patenterteilung: **30.08.2006**
(21) Anmeldenummer: 03100363.5
(22) Anmeldetag: 17.02.2003
(51) Int. Cl.: B60K 17/356, F16H 61/46

(54) **Antriebssystem eines Arbeitsfahrzeugs**
Drive system for working vehicle
Système d'entraînement pour véhicule utilitaire

(30) Priorität: 16.03.2002 DE 10211799
(43) Veröffentlichungstag der Anmeldung: 08.10.2003
(73) Patentinhaber: DEERE & COMPANY, Moline, Illinois 61265-8098 (US)
(72) Erfinder: Kempf, Bernd, 66484, Althornbach (DE); Bohrer, Stefan, 66606, St. Wendel (DE); Hofer, Jürgen, 66501, Grossbundenbach (DE)
(74) Vertreter: Holst, Sönke

(56) Entgegenhaltungen:
- EP-A- 0 985 592
- EP-A- 1 223 069
- WO-A-92/18345

## Beschreibung

Die Erfindung betrifft ein Antriebssystem eines Arbeitsfahrzeugs.

Bei vielen Arbeitsfahrzeugen, wie landwirtschaftlichen Fahrzeugen und Erntemaschinen, werden hydraulische Antriebe eingesetzt. Sie umfassen eine durch einen Verbrennungsmotor angetriebene Pumpe und einen mit der Pumpe hydraulikflüssigkeitsleitend verbundenen Motor, der ein Rad oder mehrere Räder antreibt. Bei manchen Fahrzeugen werden Räder der Vorder- und Hinterachse durch jeweils mindestens einen, den Achsen zugeordneten Motor hydraulisch angetrieben.

Bei derartigen hydraulischen Allradantrieben kommt es in bestimmten Betriebssituationen zu einem Problem, insbesondere bei Bergabfahrten, wenn eine größere Last auf die vordere als die hintere Achse wirkt. Die Antriebsmotoren wirken dann als Pumpen, die einen Druck erzeugen, der größer als der Druck der Pumpe sein kann. Durch den unterschiedlichen Reibungsschluss der Räder mit dem Untergrund infolge der unterschiedlichen Lasten kann der Fall auftreten, dass sich die Strömungsrichtung am Motor einer weniger belasteten Achse umkehrt und sich die Räder an dieser entgegen der Fahrtrichtung drehen. Es entsteht der so genannte Backspin-Effekt.

In der US 5 199 525 A ist ein Steuerschaltkreis für einen hydraulischen Allradantrieb beschrieben. Der Vorder- und der Hinterachse ist je ein Hydromotor zugeordnet, die durch eine einzige Pumpe angetrieben werden. Zwischen der Pumpe und einem bezüglich des Backspin-Effekts kritischen Motor am Hinterrad ist eine druckgesteuerte Ventilanordnung vorgesehen. Wenn ein Druckunterschied im Versorgungsstrang des Hinterrad-Motors einen voreingestellten Wert erreicht, wechselt das Ventil seine Stellung. In dieser Stellung wird die Druckbeaufschlagung des Hinterrad-Motors von der Pumpeneinrichtung unterbrochen und befindet sich nun im Leerlauf. Dadurch wird zwar die Gefahr des Auftretens des Backspin-Effekts vermindert, allerdings auf Kosten der Bremskraft des Hinterrads, das in einer entsprechenden Situation nur noch frei mitläuft.

In der DE 199 18 882 A ist ein hydraulisch angetriebenes Fahrzeug, insbesondere eine Erntemaschine, beschrieben, bei dem den einzelnen Rädern Hydraulikmotoren und Drehzahlsensoren zugeordnet sind. Berechnete Drehzahlen werden mit den gemessenen Drehzahlen verglichen. Jedes Drehzahlsignal, das den berechneten Wert überschreitet, zeigt ein schlupfendes oder durchdrehendes Rad an. Es wird ein Signal an den Verdrängungssteller des betroffenen Motors gesandt, um eine Reduzierung von dessen Fluidverdrängung zu bewirken und ein Durchdrehen des Rades zu vermeiden.

Die EP 0 985 592 A beschreibt ein hydraulisch angetriebenes Fahrzeug, das vier Räder und ihnen zugeordnete Hydraulikmotore aufweist. Den Rädern sind jeweils Drehzahlsensoren zugeordnet. In den Abflussleitungen der Hydraulikmotore sind Proportionalbegrenzerventile vorgesehen, die durch eine Steuerung kontrolliert werden. Der von der zur Versorgung der Hydraulikmotore dienenden Pumpe bereitgestellte Druck wird durch einen Sensor erfasst, dessen Ausgangssignal ebenfalls der Steuerung zugeführt wird. Anhand der Drehzahlsignale werden die Proportionalbegrenzerventile angesteuert, um Durchdrehen der Räder zu verhindern. Anhand des Signals des Drucksensors kann ein Bergabfahrbetrieb erkannt werden, anhand dessen der hintere Motor durch das Proportionalbegrenzerventil gedrosselt werden kann. Hier wird jedoch nur der Druck der Pumpe gemessen, so dass anhand des Signals des Drucksensors nicht der Betriebszustand der einzelnen Motore erkannt werden kann.

In der WO 92/18345 A wird ein hydraulisches Antriebssystem mit einer Pumpe mit verstellbarer Fluidverdrängung und einem Hydraulikmotor mit verstellbarer Fluidverdrängung beschrieben.

Die nach dem Prioritätstag des vorliegenden Schutzrechts veröffentlichte EP 1 223 069 A beschreibt ein Traktionssteuersystem für ein hydrostatisch angetriebenes Fahrzeug, das eine Pumpe mit verstellbarer Fluidverdrängung und zwei Hydraulikmotoren mit verstellbarer Fluidverdrängung umfasst, die jeweils einem Traktionsmittel (Rad bzw. Kette) zugeordnet sind. Die Drehzahlen der Hydraulikmotoren und die Drücke am Ein- und Auslass der Pumpe werden erfasst und einer Steuerung zugeführt, welche die Fluidverdrängung der Pumpe und Motoren derart steuert, dass die Fluidverdrängung der eher zum Durchrutschen neigenden Antriebsachse präventiv in Richtung geringerer Momentenübertragung verstellt wird.

Es sind Betriebssituationen denkbar, in denen ein einziger Sensor, der entweder die Drehzahl eines Rades oder den Druckunterschied im Versorgungsstrang eines Hydraulikmotors erfasst, einen Messwert abgibt, der keinen sinnvollen Rückschluss auf die Betriebssituation und auf die zu treffenden Maßnahmen erlaubt. So kann der Druckunterschied auf einen sich drehenden Motor hinweisen, dessen angetriebenes Rad aber gegenüber dem Erdboden schlupft. Andererseits weist ein Drehzahlsensor auch dann auf ein drehendes Rad hin, wenn es dem Backspin-Effekt unterliegt.

Das der Erfindung zugrunde liegende Problem wird darin gesehen, ein verbessertes Antriebssystem eines Arbeitsfahrzeugs bereitzustellen, das die genannten Nachteile nicht aufweist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Antriebssystem des Arbeitsfahrzeugs, bei dem es sich insbesondere um eine selbstfahrende Erntemaschine handeln kann, umfasst einen Hauptmotor, der in der Regel ein Verbrennungsmotor ist. Der Hauptmotor treibt eine Hydraulikpumpe direkt oder indirekt, d.h. über dazwischen geschaltete mechanische, hydraulische oder beliebige andere Getriebe an. Die Hydraulikpumpe steht über eine Hydraulikleitung mit einem Hydraulikmotor in Verbindung, der ein im Eingriff mit dem Erdboden befindliches Rad - oder eine Gleiskette - mechanisch antreibt. Ein Drehzahlsensor ist zur Erfassung der Drehzahl des Rades eingerichtet. Sein Signal wird einer Steuerungseinrichtung zugeführt, die einen Aktor steuert, welcher eingerichtet ist, die Fluidverdrängung des Hydraulikmotors zu verändern. Die Steuerungseinrichtung ist mit einem Drucksensor verbunden, dessen Signal eine Information über den Druckunterschied zwischen Einlass und Auslass des Hydraulikmotors enthält. Die Steuerungseinrichtung steuert den Aktor anhand der Signale des Drehzahlsensors und des Drucksensors.

Viele Arbeitsfahrzeuge weisen zwei antreibbare Achsen auf. Auch der zweiten Achse wird mindestens ein (zweiter) Hydraulikmotor zugeordnet, der durch die Hydraulikpumpe mit unter Druck stehendem Hydraulikfluid versorgt wird. Der zweiten antreibbaren Achse wird mindestens ein zweiter Hydraulikmotor mit veränderbarer Fluidverdrängung zugeordnet, deren Aktor durch die Steuerungseinrichtung beeinflussbar ist. Dem zweiten Hydraulikmotor ist ebenfalls ein Drucksensor zugeordnet, der eingerichtet ist, Signale bereitzustellen, die eine Information über den Unterschied der am Einlass und am Auslass des zweiten Hydraulikmotors herrschenden Drücke enthalten. Das Signal des zweiten Drucksensors wird der Steuerungseinrichtung zugeführt, die den zweiten Aktor in Abhängigkeit vom Signal des zweiten Drucksensors ansteuert.

Auf diese Weise erhält die Steuerungseinrichtung zwei voneinander unabhängige Informationen über den Betriebszustand des Hydraulikmotors. Der vom Drucksensor gemessene Druckunterschied zwischen Einlass und Auslass des Hydraulikmotors enthält eine Information über die vom Hydraulikmotor mechanisch auf den Erdboden übertragene Kraft (bzw. das Drehmoment oder die Leistung). Anhand des Signals des Drucksensors ist somit erkennbar, ob das Rad das Arbeitsfahrzeug antreibt, dann ist der Druck am Einlass größer als am Auslass, oder ob das Rad durchdreht, dann ist der Druck am Einlass etwa gleich dem Druck am Auslass, oder ob das Rad durch einen als Pumpe wirkenden weiteren Hydraulikmotor, beispielsweise am Hang, in eine der beabsichtigten Drehrichtung entgegen gerichtete Richtung gedreht wird, d.h. dem Backspin-Effekt unterliegt, dann ist der Druck am Auslass größer als am Einlass. Außerdem wird die Drehzahl des Rades mit dem Drehzahlsensor erfasst. Die Steuerungseinrichtung ist anhand der Signale beider Sensoren in der Lage, den Aktor zu veranlassen, die Fluidverdrängung des Hydraulikmotors derart einzustellen, dass sich das Rad in der gewünschten Richtung und mit der gewünschten Geschwindigkeit dreht. Durch die Rückführung beider Informationen über den Betriebszustand des Rads erhält man ein adaptives Regelsystem. Im Schubbetrieb, beispielsweise beim Bremsen oder Bergabfahren, kann ein Blockieren oder Rückwärtsdrehen angetriebener Hinterräder vermieden werden. Die Hinterräder werden in diesem Fall nicht abgeschaltet, so dass ihre Bremswirkung verloren geht, sondern werden mit einem an die jeweilige Situation angepassten Hydraulikfluidfluss versorgt. Beim Bergauffahren rückwärts geht der Hydraulikfluss nicht für durchdrehende Hinterräder verloren, sondern wird den Vorderrädern zugeführt.

Die Erfindung ermöglicht im Bedarfsfall eine sanfte Änderung der Stellung des Aktors, so dass ruckartige Verzögerungen oder Beschleunigungen des Arbeitsfahrzeugs vermieden werden. Beim Bergauffahren vorwärts und auch rückwärts erhält man durch die Regelung der Fluidverdrängung des Hydraulikmotors eine optimale Traktion auch an einer Hinterachse, die geringer als die Vorderachse belastet ist. Beim Bergabfahren verhindert das Antriebssystem, dass die Hinterräder sich rückwärts drehen oder stehen bleiben. Das Arbeitsfahrzeug ist wesentlich sicherer lenkbar. Das Antriebssystem ist gegenüber mechanischen Allradantrieben sehr vorteilhaft, da es weniger Platz benötigt, Räder beliebiger Größe verwendbar sind, und die Antriebsleistung selbsttätig dahin geleitet wird, wo sie auch auf den Erdboden übertragen werden kann. Da keine Kardanwelle erforderlich ist, kann die Erfindung auch an Mähdreschern eingesetzt werden.

Der Drucksensor kann den Druck am Auslass des Hydraulikmotors messen. Der Steuerungseinrichtung wird in dieser Ausführungsform eine weitere Information zugeführt, die sich auf den Druck am Einlass des Hydraulikmotors bezieht. Diese Information kann durch einen am Einlass angeordneten Drucksensor gewonnen werden, oder aus einem Signal abgeleitet werden, dass von dem Druck abhängt, den die Hydraulikpumpe bereitstellt oder diesen Druck vorgibt. Es kann also bei einer Hydraulikpumpe mit veränderbarer Fluidverdrängung die Stellung der Taumelscheibe bzw. ihres Verstellantriebs mit einem Sensor erfasst oder ein Stellsignal eines Aktors erfasst werden, der die Taumelscheibe verstellt. Auch die Stellung eines zur Verstellung der Taumelscheibe der Hydraulikpumpe dienenden Fahrhebels könnte erfasst werden, um eine Information über den am Einlass des Hydraulikmotors herrschenden Druck bereitzustellen.

Bei einer anderen Ausführungsform findet ein einziger Drucksensor Verwendung, der die Druckdifferenz erfasst, welche zwischen dem Einlass und dem Auslass des Hydraulikmotors herrscht. Dazu kann ein Drucksensor mit einer bewegbaren Membran genutzt werden, deren eine Seite mit dem Auslass und deren andere Seite mit dem Einlass hydraulikflüssigkeitsleitend in Verbindung steht. Die Position der Membran wird durch einen Fühler erfasst.

Es wäre grundsätzlich denkbar, zwei Räder einer angetriebenen Achse durch jeweils einen, den einzelnen Rädern zugeordneten Hydraulikmotor anzutreiben. Aus Kostengründen ist jedoch die Verwendung eines einzelnen Hydraulikmotors für die Räder einer Achse bevorzugt, der vorzugsweise über ein selbstsperrendes Differenzialgetriebe mit den beiden Rädern in Verbindung steht.

Der Steuereinrichtung wird zweckmäßigerweise ein Signal eines zweiten Drehzahlsensors zugeführt, der eingerichtet ist, die Drehzahl eines Rads der zweiten Achse zu erfassen. Ein derartiger Sensor ist zur Vervollständigung der der Steuerungseinrichtung zugeführten Information sinnvoll, und zwar unabhängig davon, ob die zweite Achse angetrieben wird oder nicht, und ob sie ggf. durch einen Hydraulikmotor mit verstellbarer oder fester Fluidverdrängung angetrieben wird. Der zweite Drehzahlsensor erfasst die Drehzahl eines in der Regel traktionsunkritischeren Rads und stellt eine Information über die tatsächliche Geschwindigkeit des Arbeitsfahrzeugs bereit. Es wäre auch denkbar, zusätzlich oder alternativ zum zweiten Drehzahlsensor einen direkt mit dem Erdboden zusammenwirkenden Sensor zu verwenden, beispielsweise einen Radarsensor.

Bei Arbeitsfahrzeugen mit zwei angetriebenen Achsen finden an den beiden Achsen häufig Räder unterschiedlicher Durchmesser Verwendung. Oft werden auch die Räder mit Rädern anderen Durchmessers getauscht, die gerade zur Verfügung stehen. Um zu erreichen, dass die Räder beider Achsen mit derselben Umfangsgeschwindigkeit angetrieben werden - um unnötigen Verschleiß der Laufflächen der Räder zu vermeiden - ist es zweckmäßig, nach jedem Wechsel der Radgröße das Übersetzungsverhältnis des Antriebs der Räder an die jeweilige Radgröße anzupassen. Diese Anpassung könnte bei mechanischen Getrieben durch eine aufwändige Änderung des Übersetzungsverhältnisses erfolgen. Bei einem erfindungsgemäßen hydraulischen Antrieb, bei dem die Räder zweier Achsen durch je einen Hydraulikmotor angetrieben werden, von denen zumindest einer eine veränderbare Fluidverdrängung aufweist, ist jedoch mittels der Steuerungseinrichtung und des Aktors eine selbsttätige Anpassung der Übersetzungsverhältnisse möglich. In einer einfachen Ausführungsform wird in eine Eingabeeinrichtung manuell eine Information über den Quotienten der Radgrößen der ersten und zweiten Achse eingegeben. Im Fahrbetrieb wird diese Information von der Steuerungseinrichtung bei der Ansteuerung des Aktors berücksichtigt. Bei einer komfortableren Ausführungsform kann mittels einer entsprechenden Eingabe in eine Eingabeeinrichtung ein Kalibriermodus ausgewählt werden. Im Kalibriermodus, der zweckmäßigerweise auf einem traktionsunkritischen Untergrund durchgeführt wird, erfasst die Steuerungseinrichtung die Drehzahlen der Räder beider Achsen, aus denen die oben genannte Information über den Quotienten der Radgrößen abgeleitet wird. Die Steuerungseinrichtung steuert den Aktor dann so an, dass die Umfangsgeschwindigkeit der Räder beider Achsen gleich ist. Diesen Gedanken kommt selbstständiger erfinderischer Rang zu.

Zur Vorgabe der Geschwindigkeit des Arbeitsfahrzeugs findet in der Regel eine Hydraulikpumpe mit veränderlichem Fördervolumen Verwendung. Das Fördervolumen wird in einfacheren Ausführungsformen rein mechanisch, elektromechanisch oder hydraulisch durch einen Fahrhebel und/oder ein Pedal verstellt. In einer bevorzugten Ausführungsform ist der Hydraulikpumpe ein mit der Steuerungseinrichtung verbundener Aktor zugeordnet, der zur Einstellung der Fluidverdrängung der Hydraulikpumpe dient. Dem Bediener wird zur Vorgabe der Sollgeschwindigkeit des Arbeitsfahrzeugs eine Bedieneinrichtung zur Verfügung gestellt, beispielsweise in Form eines Fahrhebels, die der Steuerungseinrichtung ein Sollgeschwindigkeitssignal zuführt, das bei der Ansteuerung des Aktors der Hydraulikpumpe berücksichtigt wird.

Insbesondere bei Erntemaschinen hängt die Belastung des Hauptmotors von der Vortriebsgeschwindigkeit ab, da die Rate aufgenommenen und verarbeiteten Ernteguts geschwindigkeitsabhängig ist und die Gutbearbeitungseinrichtungen, beispielsweise Häckseltrommeln oder Dresch- und Trenneinrichtungen, einen beträchtlichen Anteil der vom Hauptmotor bereitgestellten Leistung aufnehmen. Bei derartigen Arbeitsfahrzeugen ist es sinnvoll, die Vortriebsgeschwindigkeit nicht nur von einem Sollwert abhängig zu machen, der von einem Bediener eingegeben wird, sondern sie derart zu steuern, dass die Belastung des Hauptmotors konstant ist oder in einem vordefinierten Bereich bleibt. Dazu ist ein Belastungssensor vorgeschlagen, der eine Information über die Belastung des Hauptmotors bereitstellt und sie der Steuerungseinrichtung zuführt, die den Aktor der Hydraulikpumpe in Abhängigkeit von der erfassten Belastung des Hauptmotors einstellt. Der Belastungssensor misst die Belastung des Hauptmotors direkt oder indirekt; er kann beispielsweise die Drehzahl oder den Kraftstoffverbrauch des Hauptmotors bzw. eine Rate des der Arbeitsmaschine zugeführten Ernteguts erfassen, z. B. mit einem Sensor, der den Abstand zwischen Zuführwalzen eines Feldhäckslers misst. Auf diese Weise wird die Vortriebsgeschwindigkeit der Leistungskurve des Hauptmotors permanent angepasst. Man erhält eine selbsttätige Geschwindigkeitsregelung.

Die mittels eines Aktors verstellbare Hydraulikpumpe kann auch zur Vorgabe einer länderspezifischen Höchstgeschwindigkeit dienen. Der Aktor wird bei dieser Ausgestaltung durch die Steuerungseinrichtung aus der Ruheposition nur bis maximal in eine Stellung verbracht, die einer bestimmten Höchstgeschwindigkeit entspricht.

In den Zeichnungen sind drei nachfolgend näher beschriebene Ausführungsbeispiele dargestellt. Es zeigt:
- Fig. 1: ein Schema einer ersten Ausführungsform eines Antriebssystems, die nicht unter den Umfang des Anspruchs 1 fällt,
- Fig. 2: ein Schema einer zweiten Ausführungsform eines erfindungsgemäßen Antriebssystems, und
- Fig. 3: ein Schema einer dritten Ausführungsform eines erfindungsgemäßen Antriebssystems.

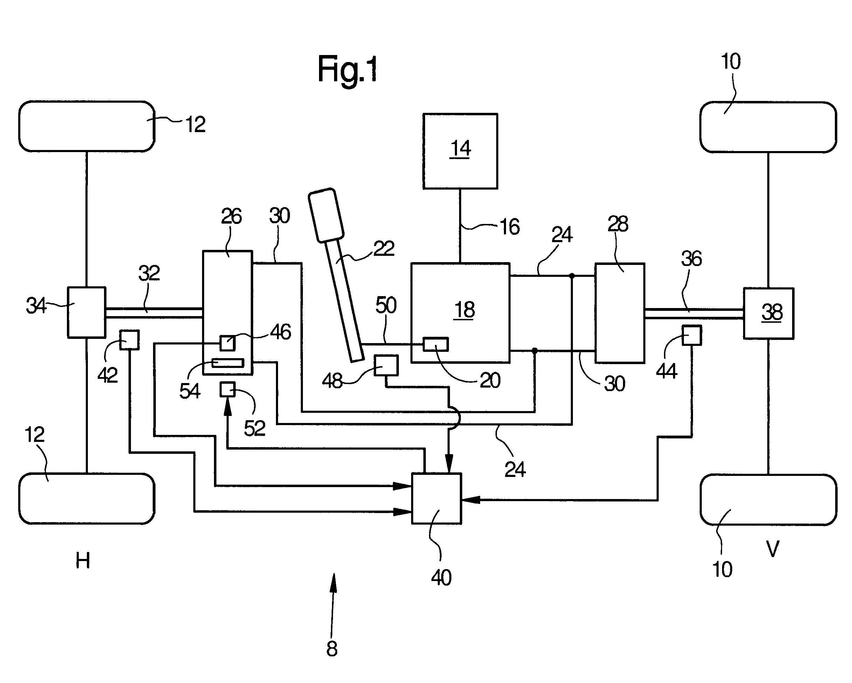

In der Figur 1 ist eine erste Ausführungsform eines Antriebssystems schematisch dargestellt. Ein Arbeitsfahrzeug 8 weist einen (nicht dargestellten) Rahmen oder ein selbsttragendes Chassis auf, der sich auf vorderen Rädern 10 und hinteren Rädern 12 abstützt, die sich im Eingriff mit dem Erdboden befinden. Die hinteren Räder 12 sind in der Regel lenkbar, während die vorderen Räder 10 größeren Durchmessers als die hinteren Räder 10 sind und den größeren Teil des Gewichts des Arbeitsfahrzeugs 8 abstützen, insbesondere wenn es sich um eine Erntemaschine in Form eines Mähdreschers oder selbstfahrenden Feldhäckslers handelt. Die vorderen Räder 10 sind somit traktionsunkritischer als die hinteren Räder 12.

Das Antriebssystem umfasst einen Hauptmotor 14 in Form eines Verbrennungsmotors (Dieselmotor). Über eine Welle 16 treibt der Hauptmotor 14 eine Hydraulikpumpe 18 an, deren Fluidverdrängung durch eine Taumelplatte 20 veränderbar ist, deren Position mechanisch durch einen Fahrhebel 22 gesteuert wird, welcher sich in einer Fahrerkabine des Arbeitsfahrzeugs 8 befindet. Die Hydraulikpumpe 18 weist einen Auslass auf, der durch Leitungen 24 mit dem Einlass eines ersten Hydraulikmotors 26 und dem Einlass eines zweiten Hydraulikmotors 28 verbunden ist. Ein Einlass der Hydraulikpumpe 18 ist über Leitungen 30 mit dem Auslass des ersten Hydraulikmotor 26 und dem Auslass des zweiten Hydraulikmotors 28 verbunden. Der Hauptmotor 14 treibt, falls das Arbeitsfahrzeug 8 eine selbstfahrende Erntemaschine ist, auch deren Gutbearbeitungs- bzw. Fördereinrichtungen an.

Der erste Hydraulikmotor 26 treibt über eine erste Antriebswelle 32 und ein erstes selbstsperrendes Differenzialgetriebe 34 die beiden hinteren Räder 12 an. Der zweite Hydraulikmotor 28 treibt über eine zweite Antriebswelle 36 und ein zweites selbstsperrendes Differenzialgetriebe 38 die beiden vorderen Räder 10 an. Der erste Hydraulikmotor 26 kann wahlweise ein- und ausschaltbar sein, so dass ein Vierradantrieb nur in besonderen Betriebssituationen auswählbar ist, in denen ein besseres Traktionsvermögen benötigt wird. Zwischen dem zweiten Hydraulikmotor 28 und dem zweiten Differenzialgetriebe 38 kann ein Schaltgetriebe mit unterschiedlichen, wählbaren Übersetzungsstufen vorhanden sein, das in der Figur 1 aus Gründen der Übersichtlichkeit nicht eingezeichnet ist. Zum Rückwärtsfahren kann das Schaltgetriebe einen Rückwärtsgang aufweisen, wobei der erste Hydraulikmotor 26 beim Rückwärtsfahren abgeschaltet oder mit einem Hydraulikfluss umgekehrter Flussrichtung versorgt wird oder ebenfalls mit einem umkehrbaren Getriebe ausgestattet ist. Alternativ kann zum Rückwärtsfahren durch entsprechende (aus Übersichtlichkeitsgründen nicht mit eingezeichnete) Ventile die Flussrichtung in den Leitungen 24 und 30 umkehrbar sein.

Eine Steuerungseinrichtung 40 ist mit einem ersten Drehzahlsensor 42, einem zweiten Drehzahlsensor 44 und einem ersten Drucksensor 46 verbunden. Der erste Drehzahlsensor 42 ist der ersten Antriebswelle 32 benachbart angeordnet und gibt bei jeder Umdrehung (oder mehrmals während einer Umdrehung) der ersten Antriebswelle 32 einen Impuls ab. Er kann einen optischen oder magnetischen Sensor umfassen, der mit entsprechenden Markierungen oder Permanentmagneten zusammenwirkt, die an der ersten Antriebswelle 32 befestigt sind. Der zweite Drehzahlsensor 44 ist der zweiten Antriebswelle 36 benachbart angeordnet und gibt bei jeder Umdrehung (oder mehrmals während einer Umdrehung) der zweiten Antriebswelle 36 einen Impuls ab. Er kann einen optischen oder magnetischen Sensor umfassen, der mit entsprechenden Markierungen oder Permanentmagneten zusammenwirkt, die an der zweiten Antriebswelle 36 befestigt sind. Der Drucksensor 46 ist im Innenraum des ersten Hydraulikmotors 26 angeordnet und erfasst den Druck, der am Auslass des ersten Hydraulikmotors 26 anliegt. Ein Fahrhebelstellungssensor 48 ist dem Mechanismus 50 zugeordnet, der die Bewegung des Fahrhebels 22 auf die Taumelscheibe 20 der Hydraulikpumpe 18 überträgt. Der Fahrhebelstellungssensor 48 erfasst die aktuelle Stellung des Fahrhebels 22 optisch oder magnetisch.

Die Steuerungseinrichtung 40 ist mit einem elektromechanischen Aktor 52 verbunden, der zur Verstellung einer Taumelplatte 54 des ersten Hydraulikmotors 26 eingerichtet ist. Eine Information über die Stellung des Aktors 52 kann an die Steuerungseinrichtung 40 zurückgekoppelt werden. Findet ein Schrittmotor als Aktor 52 Verwendung, erübrigt sich diese Rückkopplung. Sie ist auch grundsätzlich nicht erforderlich, da der Betriebszustand des ersten Hydraulikmotors 26 erfasst wird.

Die Steuerungseinrichtung 40 erhält vom zweiten Drehzahlsensor 44 einen Messwert hinsichtlich der Drehzahl der vorderen Räder 10, der wegen der unkritischeren Traktion der vorderen Räder 10 in der Regel eine zutreffende Information über die tatsächliche Geschwindigkeit des Arbeitsfahrzeugs 8 enthält. Außerdem erhält die Steuerungseinrichtung 40 vom ersten Drehzahlsensor 42 eine Information über die Drehzahl der hinteren Räder 12. Anhand eines Vergleichs der Messwerte der Drehzahlsensoren 42, 44 prüft die Steuerungseinrichtung 40 ab, ob die hinteren Räder 12 einen guten Bodenkontakt haben. Gegebenenfalls wird die Stellung der Taumelplatte 54 durch den Aktor 52 korrigiert, um durchdrehende hintere Räder 10 zu verlangsamen. Außerdem berechnet die Steuerungseinrichtung 40 anhand des Signals des Fahrhebelstellungssensors 48 den am Einlass des ersten Hydraulikmotor 26 herrschenden Druck. Dieser wird mit dem Druck am Auslass des Hydraulikmotors 26 verglichen, welcher durch den Drucksensor 46 gemessen wird. Der Vergleich erlaubt eine weitere Bestimmung des Betriebszustands des ersten Hydraulikmotors 26.

Wenn der Druck am Einlass größer als am Auslass ist, setzt der erste Hydraulikmotor 26 Leistung um und treibt das Arbeitsfahrzeug 8 voran. Ist der Druck am Einlass nicht viel größer als am Auslass, ist die Traktion der hinteren Räder 10 schlecht. Dann veranlasst die Steuerungseinrichtung 40, dass der Aktor 52 die Taumelplatte 54 in Richtung kleinerer Geschwindigkeit verstellt, bis wieder Traktion hergestellt ist und der Druck am Einlass größer als am Auslass des ersten Hydraulikmotors 26 ist. Ist der Druck am Auslass größer als am Einlass, was beispielsweise dann geschehen kann, wenn beim Bremsen oder Bergabfahren der zweite Hydraulikmotor 28 als Pumpe wirkt, was zur Folge haben kann, dass sich der erste Hydraulikmotor 26 in unerwünschter Weise rückwärts dreht (Backspin-Effekt), steuert die Steuerungseinrichtung 40 den Aktor 52 in eine Stellung, in der der erste Hydraulikmotor 26 abgeschaltet ist. Denkbar wäre in diesem Fall auch eine Umkehrung der Flussrichtung im ersten Hydraulikmotor 26 durch Umschalten der Leitungen 24, 30 mittels eines Ventils. Der Steuerungseinrichtung 40 ist es auf diese Weise wegen der ihr zugeführten Informationen von den drei Sensoren 42, 44 und 46 möglich, den Aktor 52 optimal anzusteuern.

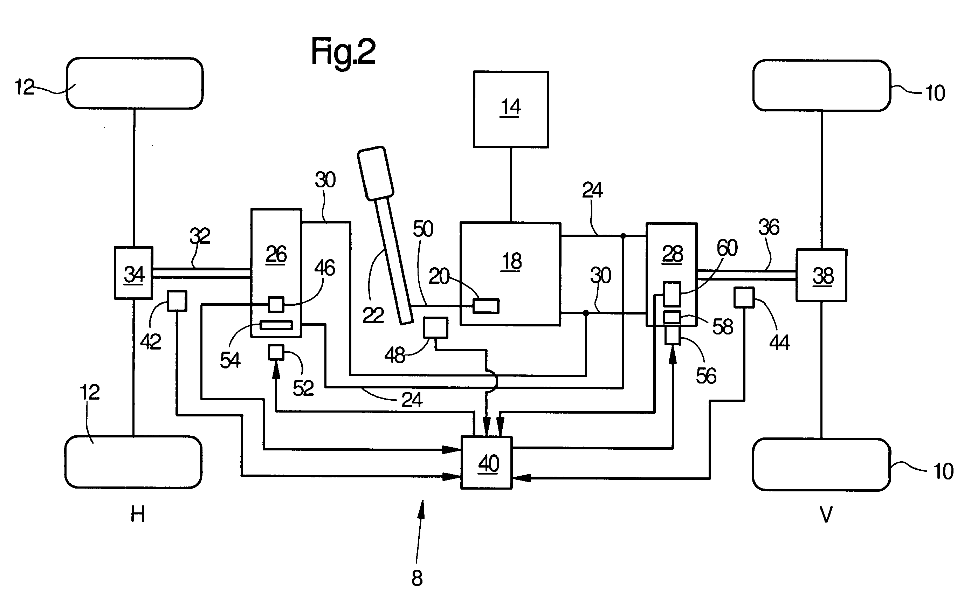

In der Figur 2 ist eine zweite Ausführungsform eines Antriebssystems einer Arbeitsmaschine 8 schematisch dargestellt. Mit der ersten Ausführungsform übereinstimmende Elemente sind mit denselben Bezugszeichen gekennzeichnet. Der wesentliche Unterschied zur ersten Ausführungsform besteht darin, dass auch der zweite Hydraulikmotor 28 eine durch einen elektromechanischen Aktor 56 und eine verstellbare Taumelplatte 58 veränderbare Fluidverdrängung aufweist, und ihm ein zweiter Drucksensor 60 zugeordnet ist, der den Druck am Auslass des zweiten Hydraulikmotors 28 misst. Die Steuerungseinrichtung 40 ist mit dem Drucksensor 60 und dem Aktor 56 verbunden. Die Steuerungseinrichtung 40 erfasst den Betriebszustand des ersten Hydraulikmotors 26 wie bei der ersten Ausführungsform und analog den Betriebszustand des zweiten Hydraulikmotors 28 und steuert analog die beiden Aktoren 52, 56 derart an, dass ein optimaler Betriebszustand der Hydraulikmotore 26, 28 erzielt wird.

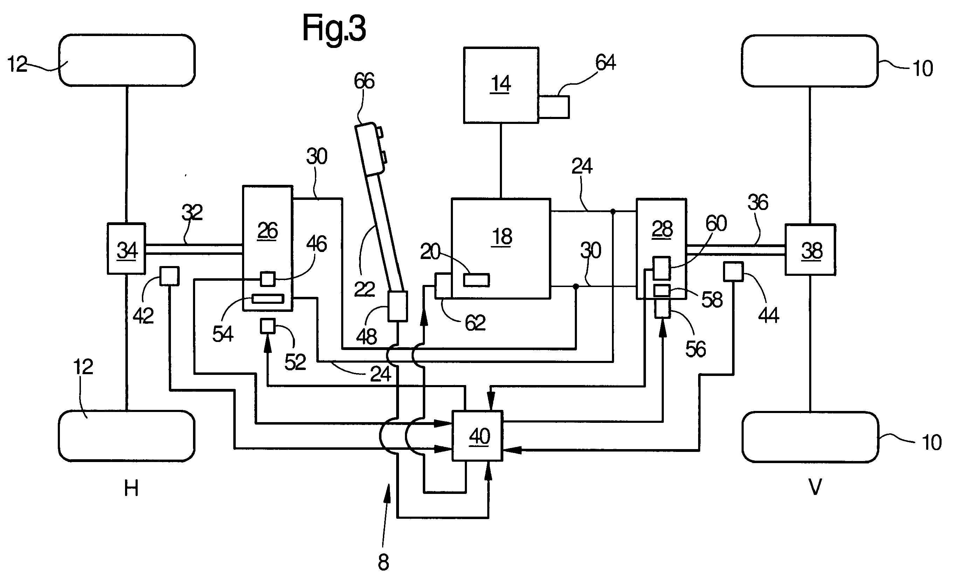

In der Figur 3 ist eine dritte Ausführungsform eines Antriebssystems einer Arbeitsmaschine 8 schematisch dargestellt. Mit der ersten bzw. zweiten Ausführungsform übereinstimmende Elemente sind mit denselben Bezugszeichen gekennzeichnet. Der wesentliche Unterschied zur zweiten Ausführungsform besteht darin, dass der Fahrhebel 22 nicht über einen Mechanismus (50 in Figur 2) mit der Taumelplatte 20 der Hydraulikpumpe 18 verbunden ist. Anstelle dessen ist ein dritter Aktor 62 vorgesehen, der elektromechanisch oder elektrohydraulisch arbeitet und durch die Steuerungseinrichtung 40 gesteuert wird. Es ist denkbar, der Steuerungseinrichtung 40 zusätzlich eine Information über die jeweilige Stellung des dritten Aktors 62 zuzuführen. Eine derartige Rückführung ist aber nicht unbedingt notwendig, da ein Schrittmotor verwendet werden kann, und da der Steuerungseinrichtung auch wegen der Rückkopplung insbesondere über die Drehzahlsensoren 42, 44 eine Information über den Betriebszustand der Hydraulikpumpe 18 vorliegt. Die Steuerungseinrichtung 40 erhält eine Information über die Stellung des Fahrhebels 22 vom Fahrhebelstellungssensor 48 und steuert den dritten Aktor 62 entsprechend.

Durch die Drehzahlsensoren 42, 44 wird die tatsächliche Geschwindigkeit des Arbeitsfahrzeugs 8 gemessen. Wenn sie einen länderspezifisch vorgegebenen Höchstwert erreicht oder überschreitet, veranlasst die Steuerungseinrichtung 40, dass der dritte Aktor 62 die Taumelscheibe 20 der Hydraulikpumpe 18 in eine Stellung verbringt, die einer niedrigen Geschwindigkeit entspricht. Dadurch ist eine Einhaltung der zulässigen Höchstgeschwindigkeit gewährleistet. Die Steuerungseinrichtung 40 erfasst außerdem die Betriebszustände des ersten und zweiten Hydraulikmotors 26 und 28 wie bei der zweiten Ausführungsform und steuert die beiden Aktoren 52, 56 derart an, dass ein optimaler Betriebszustand der Hydraulikmotore 26, 28 erzielt wird.

Dem Hauptmotor 14 ist bei der dritten Ausführungsform ein Belastungssensor 64 in Form eines Drehzahlsensors zugeordnet, der die Drehzahl des Hauptmotors 14 erfasst. An der Oberseite des Fahrhebels 22 ist eine Eingabeeinrichtung 66 angeordnet, die einige manuell betätigbare Tasten umfasst. Die Eingabeeinrichtung 66 und der Belastungssensor 64 sind mit der Steuerungseinrichtung 40 verbunden.

Die Eingabeeinrichtung 66 erlaubt, einen Betriebsmodus auszuwählen, in dem die Vortriebsgeschwindigkeit selbsttätig eingestellt wird. Die Steuerungseinrichtung 44 veranlasst den dritten Aktor 62, die Taumelplatte 20 in eine Stellung zu verbringen, die einer Geschwindigkeit entspricht, die durch den Fahrhebel 22 vorgebbar ist. Falls das Signal des Belastungssensors 64 jedoch darauf hinweist, dass die Drehzahl des Hauptmotors 14 infolge einer übermäßigen Belastung abgesunken ist, beispielsweise wenn eine Häcksel- oder Dresch-und Trenneinrichtung wegen einer relativ hohen aufgenommenen Erntegutrate höher als einer optimalen Maschinenauslastung entsprechend belastet ist, veranlasst die Steuerungseinrichtung 40, dass der dritte Aktor 62 die Taumelplatte 20 in Richtung geringerer Vortriebsgeschwindigkeit bewegt. Im Ergebnis wird die Vortriebsgeschwindigkeit auf einen Wert eingestellt, der einer optimalen Belastung des Hauptmotors 14 entspricht.

Durch die Eingabeeinrichtung 66 kann weiterhin ein anderer Betriebsmodus ausgewählt werden, der zur Kalibrierung der Aktoren 52 und 56 dient. Der Kalibriermodus wird zweckmäßigerweise auf einem Gelände mit guten Traktionseigenschaften ausgewählt, z. B. einer sauberen Straße. Die Steuerungseinrichtung 40 veranlasst durch Ansteuerung der Aktoren 52, 56 und 62, dass die Arbeitsmaschine 8 eine gewisse Strecke zurücklegt. Während dessen werden die Drehzahlen erfasst, die von den Drehzahlsensoren 42 und 44 gemessen werden. Die Signale der Drehzahlsensoren 42 und 44 erlauben einen Rückschluss über den Quotienten der Durchmesser der vorderen Räder 10 und der hinteren Räder 12. Dieser Quotient erlaubt der Steuerungseinrichtung 40 einen Rückschluss darauf, in welche Stellung die Aktoren 52 und 54 zu verbringen sind, um während nachfolgender Fahrten übereinstimmende Umfangsge-schwindigkeiten der vorderen Räder 10 und der hinteren Räder 12 zu erzielen und die Abnutzung der Radbeläge zu minimieren. Ein derartiger Kalibriermodus ist auch bei der ersten und zweiten Ausführungsform möglich und wird zweckmäßigerweise nach jedem Radwechsel durchgeführt.

## Patentansprüche

1. Antriebssystem eines Arbeitsfahrzeugs (8), mit einem Hauptmotor (14), der mit einer Hydraulikpumpe (18) in Antriebsverbindung steht, die hydraulikflüssigkeitsleitend mit einem Hydraulikmotor (26) verbunden ist, der mit wenigstens einem im Eingriff mit dem Erdboden befindlichen Rad (12) in Antriebsverbindung steht und dessen Fluidverdrängung durch einen mit einer Steuerungseinrichtung (40) verbundenen Aktor (52) veränderbar ist, wobei
die Steuerungseinrichtung (40) mit einem zur Erfassung der Drehzahl des Rads eingerichteten Drehzahlsensor (42) verbunden ist und betreibbar ist, den Aktor (52) in Abhängigkeit von den Signalen des Drehzahlsensors (42) zu steuern,
die Steuerungseinrichtung (40) mit einem Drucksensor (46) verbunden ist, der eingerichtet ist, Signale bereitzustellen, die eine Information über den Unterschied der am Einlass und am Auslass des Hydraulikmotors (26) herrschenden Drücke enthalten, und betreibbar ist, den Aktor (52) zusätzlich in Abhängigkeit vom Signal des Drucksensors (46) zu steuern,
an je einer Seite des Arbeitsfahrzeugs (8) angeordnete, im Eingriff mit dem Erdboden stehende Räder (10) einer zweiten Achse des Arbeitsfahrzeugs (8) mit einem zweiten Hydraulikmotor (28) in Antriebsverbindung stehen, der hydraulikflüssigkeitsleitend mit der Hydraulikpumpe (18) in Verbindung steht,
die Fluidverdrängung des zweiten Hydraulikmotors (28) durch einen zweiten, mit der Steuerungseinrichtung (40) verbundenen Aktor (56) veränderbar ist, und
die Steuerungseinrichtung (40) mit einem zweiten Drucksensor (60) verbunden ist, der zur Messung eines im zweiten Hydraulikmotor (28) herrschenden Hydraulikdrucks eingerichtet ist und den zweiten Aktor (56) in Abhängigkeit vom Signal des zweiten Drucksensors (60) steuert.

2. Antriebssystem nach Anspruch 1, **dadurch gekennzeichnet, dass** der Drucksensor (46) zur Erfassung des Drucks am Auslass des Hydraulikmotors (26) eingerichtet ist und dass der Steuerungseinrichtung (40) eine Information über den Druck am Einlass des Hydraulikmotors (26) zugeführt wird.

3. Antriebssystem nach Anspruch 1 oder 2, **dadurch gekennzeichnet, dass** der Drucksensor (46) zur Erfassung einer Druckdifferenz eingerichtet ist, die zwischen dem Einlass und dem Auslass des Hydraulikmotors (26) herrscht.

4. Antriebssystem nach einem der Ansprüche 1 bis 3, **dadurch gekennzeichnet, dass** der Hydraulikmotor (26) über ein selbstsperrendes Differenzialgetriebe (34) mit zwei einer Achse zugeordneten, an je einer Seite des Arbeitsfahrzeugs (8) angeordneten Rädern (12) in Antriebsverbindung steht.

5. Antriebssystem nach einem der vorhergehenden Ansprüche, **dadurch gekennzeichnet, dass** die Steuerungseinrichtung (40) mit einem zweiten Drehzahlsensor (44) verbunden ist, der eingerichtet ist, die Drehzahl eines im Eingriff mit dem Erdboden befindlichen Rads (10) zu erfassen, das einer zweiten Achse zugeordnet ist, und dass die Steuerungseinrichtung (40) den ersten Aktor (52) und/oder den zweiten Aktor (56) in Abhängigkeit vom Signal des zweiten Drehzahlsensors (44) steuert.

6. Antriebssystem nach einem der vorhergehenden Ansprüche, **dadurch gekennzeichnet, dass** es wahlweise in einem Kalibriermodus betreibbar ist, in dem eine Information über das Verhältnis der Durchmesser der Räder (10, 12) zweier angetriebener Achsen erfasst wird, wobei die Steuerungseinrichtung (40) den Aktor (52, 56) in nachfolgenden Betrieb anhand der erfassten Information steuert.

7. Antriebssystem nach einem der vorhergehenden Ansprüche, **dadurch gekennzeichnet, dass** die Steuerungseinrichtung (40) mit einem dritten Aktor (62) und einer Bedieneinrichtung (22) verbunden ist, wobei der dritte Aktor (62) zur Verstellung der Fluidverdrängung der Hydraulikpumpe (18) eingerichtet ist, die Bedieneinrichtung (22) zur Eingabe einer Sollgeschwindigkeit eingerichtet ist, und die Steuerung den dritten Aktor (62) in Abhängigkeit vom Signal der Bedieneinrichtung (22) steuert.

8. Antriebssystem nach Anspruch 7, **dadurch gekennzeichnet, dass** die Steuerungseinrichtung (40) mit einem Belastungssensor (64) verbunden ist, der zur direkten oder indirekten Erfassung der Belastung des Hauptmotors (14) eingerichtet ist, und zumindest den dritten Aktor (62) in Abhängigkeit vom Signal des Belastungssensors (64) verstellt.

9. Antriebssystem nach Anspruch 8, **dadurch gekennzeichnet, dass** der Belastungssensor (64) die Drehzahl des Hauptmotors und/oder eine Rate erfasst, mit der der Arbeitsmaschine Erntegut zugeführt wird.

10. Antriebssystem nach einem der vorhergehenden Ansprüche, **dadurch gekennzeichnet, dass** die Steuerungseinrichtung (40) betreibbar ist, einen oder mehrere der Aktoren (52, 56, 62) nur bis in eine Stellung zu verstellen, die einer zulässigen Höchstgeschwindigkeit entspricht.

11. Erntemaschine, insbesondere Mähdrescher oder Feldhäcksler, mit einem Antriebssystem nach einem der vorhergehenden Ansprüche.

## Claims

1. A drive system of a utility vehicle (8), with a main engine (14) which is coupled to drive a hydraulic pump (18) which is connected to convey hydraulic fluid to a hydraulic motor (26) which is coupled to drive at least one wheel (12) in engagement with the ground and whose fluid displacement can be altered by an actuator (52) connected to a control device (40), wherein
the control device (40) is connected to a speed of rotation sensor (42) for detecting the speed of rotation of the wheel and is operable to control the actuator (52) in dependence on the signals of the speed of rotation sensor (42),
the control device (40) is connected to a pressure sensor (46) which is arranged to provide signals which contain information on the difference between the pressures obtaining at the inlet and the outlet of the hydraulic motor (26) and is operable to control the actuator additionally in dependence on the signal of the pressure sensor (46),
wheels (10) of a second axle of the utility vehicle (8) arranged on each side of the utility vehicle and in engagement with the ground are coupled to be driven by a second hydraulic motor (28) which is connected for conveyance of hydraulic fluid to the hydraulic pump (18),
the fluid displacement of the second hydraulic motor (28) can be varied by a second actuator (56) connected to the control device (40), and
the control device (40) is connected to a second pressure sensor (60) which is arranged to measure a hydraulic pressure obtaining in the second hydraulic motor (28) and controls the second actuator (56) in dependence on the signal of the second pressure sensor (60).

2. A drive system according to claim 1, **characterized in that** the pressure sensor (46) is arranged to detect the pressure at the outlet of the hydraulic motor (26) and **in that** information on the pressure at the inlet of the hydraulic motor (26) is supplied to the control device (40).

3. A drive system according to claim 1 or 2, **characterized in that** the pressure sensor (46) is arranged to detect a pressure difference obtaining between the inlet and the outlet of the hydraulic motor (26).

4. A drive system according to any of claims 1 to 3, **characterized in that** the hydraulic motor (26) is connected to drive wheels (12) associated with an axle and arranged on each side of the utility vehicle through a self locking differential gear (34).

5. A drive system according to any of the preceding claims, **characterized in that** the control device (40) is connected to a second speed of rotation sensor (44) which is arranged to detect the speed of rotation of a wheel (10) in engagement with the ground which is associated with a second axle, and **in that** the control device (40) controls the first actuator (52) and/or the second actuator (56) in dependence on the signal of the second speed of rotation sensor (44).

6. A drive system according to any of the preceding claims, **characterized in that** it is selectively operable in a calibration mode, in which information on the ratio of the diameters of the wheels (10, 12) of two driven axles is detected, wherein the control device (40) controls the actuators (53, 56) in subsequent operation on the basis of the detected information.

7. A drive system according to any of the preceding claims, **characterized in that** the control device (40) is connected to a third actuator (62) and an operator device (22), wherein the third actuator (62) is arranged to adjust the fluid displacement of the hydraulic pump (18), the operator device (22) is arranged for entry of a set point speed and the controller controls the third actuator (62) in dependence on the signal of the operator device (22).

8. A drive system according to claim 7, **characterized in that** the control device (40) is connected to a load sensor (64) which is arranged to detect directly or indirectly the load on the main engine (14) and adjusts at least the third actuator (62) in dependence on the signal of the load sensor (64).

9. A drive system according to claim 8, **characterized in that** the load sensor (64) detects the speed of rotation of the main engine and/or a rate at which crop is fed to the utility machine.

10. A drive system according to any of the preceding claims, **characterized in that** the control device (40) is operable to adjust one or more of the actuators (52, 56, 62) only up to a setting which corresponds to a permissible highest speed.

11. A harvesting machine, especially a combine harvester or forage harvester with a drive system according to any of the preceding claims.

## Revendications

1. Système d'entraînement d'un véhicule de travail (8), comportant un moteur principal (14), qui est en liaison d'entraînement avec une pompe hydraulique (18), qui est reliée via une conduite de liquide hydraulique à un moteur hydraulique (26), qui est en liaison d'entraînement avec au moins une roue (12) en prise avec le sol et dont le déplacement de fluide peut être varié par un actionneur (52) relié à un dispositif de commande (40), dans lequel,
le dispositif de commande (40) est relié à un capteur de vitesse de rotation (42), conçu pour enregistrer le nombre de tours de rotation de la roue, et peut être activé pour commander l'actionneur (52) en fonction des signaux du capteur de vitesse de rotation (42),
le dispositif de commande (40) est relié à un capteur de pression (46), qui est conçu pour délivrer des signaux qui contiennent une information sur la différence entre les pressions régnant à l'entrée et à la sortie du moteur hydraulique (26), et peut être activé pour commander l'actionneur (52) en fonction des signaux du capteur de pression (46),
des roues (10), agencées sur chaque côté du véhicule de travail (8) et entrant en prise avec le sol, d'un deuxième essieu du véhicule de travail (8) sont en liaison d'entraînement avec un deuxième moteur hydraulique (28), qui est relié à la pompe hydraulique (18) via une conduite de liquide hydraulique,
le déplacement de fluide du deuxième moteur hydraulique (28) pouvant être varié par un deuxième actionneur (56) relié au dispositif de commande (40), et
le dispositif de commande (40) est relié à un deuxième capteur de pression (60), qui est conçu pour mesurer une pression hydraulique régnant dans le deuxième moteur hydraulique (28), et commande le deuxième actionneur (56) en fonction du signal du deuxième capteur de pression (60).

2. Système d'entraînement selon la revendication 1, **caractérisé en ce que** le capteur de pression (46) est conçu pour enregistrer la pression à la sortie du moteur hydraulique (26) et **en ce qu'**une information sur la pression régnant à l'entrée du moteur hydraulique (26) est acheminée vers le dispositif de commande (40).

3. Système d'entraînement selon la revendication 1 ou 2, **caractérisé en ce que** le capteur de pression (46) est conçu pour enregistrer une différence de pression qui règne entre l'entrée et la sortie du moteur hydraulique (26).

4. Système d'entraînement selon l'une quelconque des revendications 1 à 3, **caractérisé en ce que** le moteur hydraulique (26) est en liaison d'entraînement, par l'intermédiaire d'un différentiel (34) autobloquant, avec deux roues (12), associées à un essieu et agencées sur chaque côté du véhicule de travail (8).

5. Système d'entraînement selon l'une quelconque des revendications précédentes, **caractérisé en ce que** le dispositif de commande (40) est relié à un deuxième capteur de vitesse de rotation (44), qui est conçu pour enregistrer le nombre de tours de rotation d'une roue (10) en prise avec le sol et associée à un deuxième essieu, et **en ce que** le dispositif de commande (40) commande le premier actionneur (52) et/ou le deuxième actionneur (56) en fonction du signal du deuxième capteur de vitesse de rotation (44).

6. Système d'entraînement selon l'une quelconque des revendications précédentes, **caractérisé en ce qu'**il peut être actionné au choix en mode de calibrage, dans lequel est enregistrée une information sur le rapport du diamètre des roues (10, 12) de deux essieux entraînés, le dispositif de commande (40) commandant l'actionneur (52, 56) dans le mode de fonctionnement consécutif à l'appui de l'information enregistrée.

7. Système d'entraînement selon l'une quelconque des revendications précédentes, **caractérisé en ce que** le dispositif de commande (40) est relié à un troisième actionneur (62) et à une unité de manoeuvre (22), le troisième actionneur (62) étant conçu pour régler le déplacement du fluide de la pompe hydraulique (18), l'unité de manoeuvre (22) étant conçue pour entrer une vitesse de consigne et le dispositif de commande active le troisième actionneur (62) en fonction du signal de l'unité de manoeuvre (22).

8. Système d'entraînement selon la revendication 7, **caractérisé en ce que** le dispositif de commande (40) est relié à un capteur de charge (64), qui est conçu pour l'enregistrement direct ou indirect de la charge du moteur principal (14), et règle au moins le troisième actionneur (62) en fonction du signal du capteur de charge (64).

9. Système d'entraînement selon la revendication 8, **caractérisé en ce que** le capteur de charge (64) enregistre le nombre de tours de rotation du moteur principal et/ou un taux selon lequel les produits de récolte sont acheminés dans le véhicule de travail (8).

10. Système d'entraînement selon l'une quelconque des revendications précédentes, **caractérisé en ce que** le dispositif de commande (40) peut être utilisé pour régler un ou plusieurs des actionneurs (52, 56, 62) uniquement jusque dans une position qui correspond à la vitesse maximale autorisée.

11. Machine de récolte, en particulier moissonneuse-batteuse ou ensileuse, comportant un système d'entraînement selon l'une quelconque des revendications précédentes.
